# EUROPEAN PATENT APPLICATION

(11) **EP 2 666 991 A2**
(43) Date of publication of application: **27.11.2013**
(21) Application number: 13168434.2
(22) Date of filing: 20.05.2013
(51) Int. Cl.: F02C 7/00

(54) **Apparatus and system for changing temperature of vane separators in a power generating system**

(30) Priority: 25.05.2012 US 201213481347
(71) Applicant: General Electric Company, Schenectady, New York 12345 (US)
(72) Inventor: Bryant, Paul Sherwood, Alton, Hampshire GU34 2QE (GB); Mann, Richard Michael Ashley, Alton, Hampshire GU34 2QE (GB); Davies, John Carl, Alton, Hampshire GU34 2QE (GB)
(74) Representative: Cleary, Fidelma

(57) **Abstract**

This disclosure describes embodiments of a vane conditioning system (200) for use in power generating systems. These embodiments generate one or more fluid streams, which impinge on vane separators in the power generating system to change the temperature of the vane separators. In one embodiment, the vane conditioning system (200) comprises a vortex tube (202) to convert pressurized supply air to a hot fluid stream and a cold fluid stream. A flow control device (204) couples with the vortex tube (202) to regulates flow of the hot fluid stream and the cold fluid stream to the vane separators.

## Description

### BACKGROUND OF THE INVENTION

The subject matter disclosed herein relates to power generating systems and, more particularly, to examples of an apparatus and system that can modify the temperature of vane separators found in power generating systems that deploy turbo-machines (e.g., gas and steam turbines).

Exposure to precipitation and/or other moisture may eventually produce corrosion and/or other damage to components of a turbo-machine. To prevent moisture from entering the turbo-machine, power generating systems may incorporate vane separators that help to separate moisture (and/or particulates and/or debris) from air entering and/or flowing through the power generating system. Although vane separators generally remove moisture from the air entering the air inlet, such components may not provide a solution to capture, or entrain, the smallest of moisture droplets. Moreover, in some environments where cold temperatures prevail, the vane separators may become frozen or ice bound. These conditions not only reduce the efficacy of the vane separators, but may also impact the overall performance of the turbo-machine and, thus, may require significant intervention by maintenance personnel to break-up and remove ice from the surfaces of the vane separators.

The discussion above is merely provided for general background information and is not intended to be used as an aid in determining the scope of the claimed subject matter.

### BRIEF DESCRIPTION OF THE INVENTION

The invention resides in a vane conditioning system for use in power generating systems. These systems generate one or more fluid streams, e.g., air, which impinge on vane separators in the power generating system to change the temperature of the vane separators. In one embodiment, the vane conditioning apparatus comprises a vortex tube to convert pressurized supply to a hot fluid stream and a cold fluid stream. A flow control device couples with the vortex tube to regulate flow of the hot fluid stream and the cold fluid stream to the vane separators. An advantage of the proposed embodiments of the apparatus is that the embodiments change the temperature of the vane separators to capture droplets across a broader spectrum and to prevent ice build-up that can occur during inclement weather conditions, e.g., freezing fog and other icing conditions.

The invention resides in a vane conditioning apparatus that can couple with a vane stage in a power generating system. The vane conditioning apparatus comprises a vane conditioning fluid generator that converts supply fluid to a hot fluid stream and a cold fluid stream. The vane conditioning apparatus also comprises a flow control device coupled to the vane conditioning fluid generator to receive the hot fluid stream and the cold fluid stream. The flow control device has a plurality of operating states to direct one or both of the hot fluid stream and the cold fluid stream to change a temperature of a vane separator in the vane stage.

The invention further resides in a system for changing temperature of vane separators in a power generating system. The system comprises a vortex tube with a first outlet and a second outlet and a flow control device coupled to the first outlet and the second outlet. The system also comprises a controller coupled to the flow control device, where the controller comprises a processor, memory, and executable instructions stored on memory and configured to be executed by the processor. In one example, the executable instructions comprise an executable instruction to operate the flow control device in a first state to direct hot fluid from the vortex tube to the vane separators and a second state to direct cold fluid from the vortex tube to the vane separators.

The invention further resides in a power generating system that comprises a turbo-machine and an inlet system coupled to the turbo-machine. The inlet system directs air from the surrounding environment to the turbo-machine, the inlet system comprising an inlet filter housing with a vane separator. The power generating system also comprises a vane conditioning apparatus coupled to the inlet filter housing. The vane conditioning apparatus converts supply fluid to a plurality of fluid streams, including a first fluid stream at a first temperature to cool the vane separator to a temperature below air flowing in the inlet system and a second fluid stream at a second temperature to warm the vane separator to a temperature above air flowing in the inlet system.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 depicts a side schematic view of an exemplary vane conditioning apparatus as part of an inlet system on a power generating system;
FIG. 2 depicts a schematic view of another exemplary vane conditioning apparatus;
FIG. 3 depicts an exemplary flow pattern for the vane conditioning apparatus of FIG. 2;
FIG. 4 depicts an example of a vortex tube for use in a vane conditioning apparatus such as the vane conditioning apparatus of FIGS. 1 and 2;
FIG. 5 depicts an example of a vane separator found in the power generating system of FIG. 1; and
FIG. 6 depicts a schematic diagram of a system for changing temperature of vane separators that can include a vane conditioning apparatus of the present disclosure.

### DETAILED DESCRIPTION OF THE INVENTION

The discussion below highlights features of an apparatus, and an associated power generating system, that can improve operation of a turbo-machine (e.g., a gas or steam turbine). Broadly, the features help to remove condensate (e.g., water vapor and/or moisture droplets) from air that enters the turbo-machine. In one aspect, the apparatus introduces a fluid to vane separators that are found in the inlet system of the power generating system. Examples of the fluid can comprise gasses (e.g., air and/or ambient air) as well as liquids (e.g., water, refrigerants, etc.).

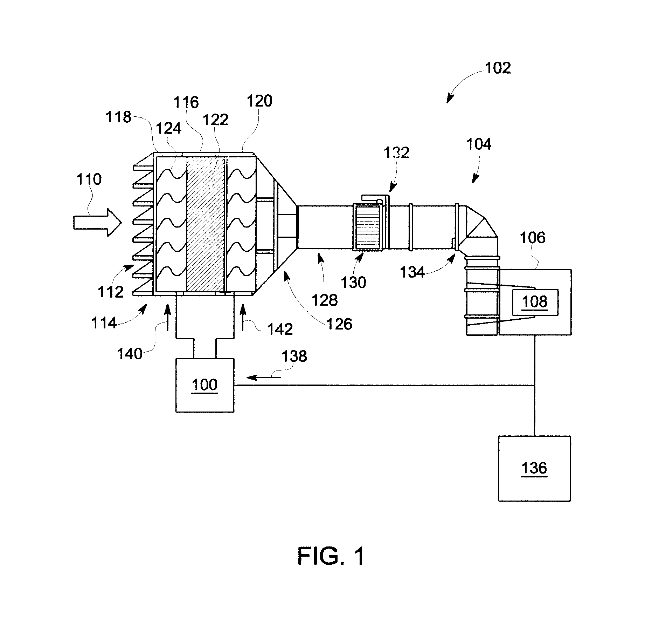

FIG. 1 illustrates a schematic diagram of one implementation of an exemplary vane conditioning apparatus 100 (also "apparatus 100") for use with a power generating system 102. In one example, the power generating system 102 features an inlet system 104 and a turbo-machine 106 with a compressor 108. During operation, the compressor 108 draws air 110 through the inlet system 104 to facilitate combustion at the turbo-machine 106.

Moving now from left to right in the diagram of FIG. 1, air 110 travels through a weather hood 112 into an inlet filter housing 114. The air 110 encounters a filter stage 116 and one or more vane stages (e.g., a front vane stage 118 and a back vane stage 120) that are found inside of the inlet filter housing 114. The filter stage 116 can comprise a filter media 122 that removes particulates from the air 110. The vane stages 118, 120 can comprise a plurality of vanes separators 124, which are in place to entrain water vapor found in the air 110. A transition piece 126 couples the inlet filter housing 114 to an inlet duct 128. The physical characteristics of these elements help to develop certain flow characteristics (e.g., velocity, pressure, etc.) in the flow of air 110. Inside of inlet duct 128, the air 110 can encounter one or more other elements, e.g., a silencer section 130, heating system 132, and screen element 134. The elements 130, 132, 134 are useful for further conditioning the air 110 as the air 110 travels through the inlet system 104 to the turbo-machine 106.

As shown in FIG. 1, in one embodiment, the apparatus 100 couples with the compressor 108 and/or a separate fluid supply 136 (e.g., a compressed air supply, a pressurized liquid supply, etc.). This configuration provides supply fluid 138 (e.g., gases and/or liquids) under pressure to the apparatus 100. In one embodiment, the apparatus 100 converts the supply fluid 138 to a plurality of fluid streams (e.g., a first fluid stream 140 and a second fluid stream 142). The apparatus 100 delivers the fluid streams 140, 142 to the inlet filter housing 114, and as discussed more below, the fluid streams 140, 142 alter the temperature of the vane separators 124.

The fluid streams 140, 142 can comprise warm and/or cold fluid (collectively, "vane conditioning fluid") (e.g., air) at various temperatures to raise and lower the temperature of the vane separators 124. In one example, the temperature of the vane conditioning fluid raises the temperature of the vane separators 124 above the ambient temperature of the air 110. The resulting temperature of the vane separators 124 does not allow water vapor in the 110 to freeze on the surface of the vane separators 124. This feature prevents ice build-up that can often occur when the power generating system 102 (FIG. 1) operates in environments that exhibit heavy fog and freezing fog conditions. In another example, the vane conditioning fluid lowers the temperature of the vane separators 124 below the temperature of the air 110. At this reduced temperature, the vane separators 124 can induce a so-called "cold finger effect" in which water vapor in the air 110 will condense from gas phase to liquid phase on the surface of the vane separators 124. The cold-finger effect can also cause water droplets the vane separators 124 capture to combine, or coalesce, to form larger water droplets (e.g., greater than 10 microns), which the moving air 110 is less likely to carry from the surface of the vane separators 124 to other parts of the inlet system 104.

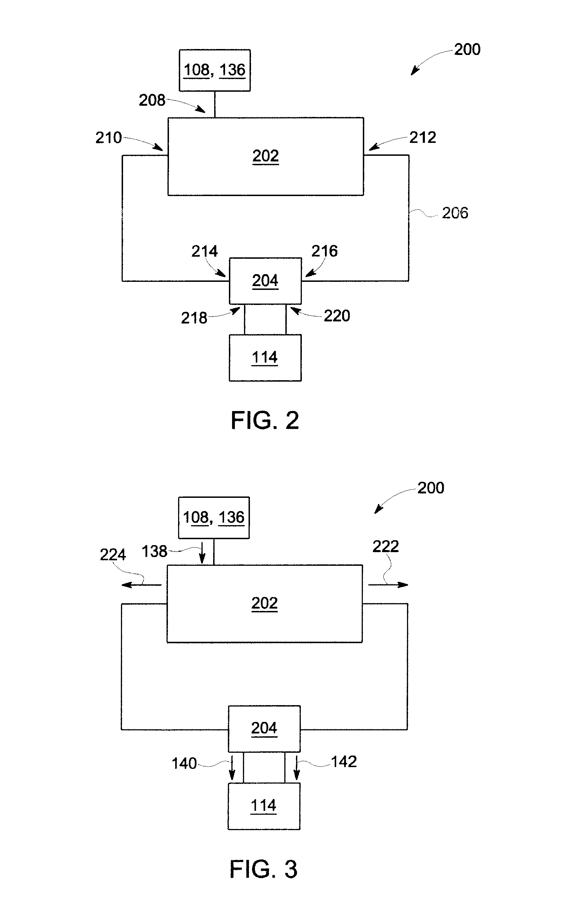

FIGS. 2 and 3 illustrate a schematic block diagram of another example of a vane conditioning apparatus 200 (also "apparatus 200") that can generate the vane conditioning fluid discussed above. FIG. 2 shows a schematic block diagram of the vane conditioning apparatus 200. FIG. 3 illustrates an exemplary fluid flow pattern with arrows on the schematic diagram of FIG. 2 to depict the general direction of fluid flow that occurs during operation, e.g., operation of power generating system 102 of FIG. 1.

Turning first to FIG. 2, the apparatus 200 includes a vane conditioning fluid generator 202 and a flow control device 204. Ducts 206 couple the components of the apparatus 200 together and to the supply 108, 136 and inlet filter housing 114. Examples of the ducts 206 comprise tubes, conduits, and like elements through which fluid can flow, e.g., among and between the vane conditioning fluid generator 202 and the flow control device 204. In one example, the vane conditioning fluid generator 202 has a supply inlet 208 and a pair of conditioned fluid outlets (e.g., a first conditioned fluid outlet 210 and a second conditioned fluid outlet 212). The flow control device 204 has a pair of conditioned fluid inlets (e.g., a first conditioned fluid inlet 214 and a second conditioned fluid inlet 216) that couple with the conditioned fluid outlets 210, 212 on the vane conditioning fluid generator 202. The flow control device 204 also has a pair of vane stage outlets (e.g., a first vane stage outlet 218 and a second vane stage outlet 220), which can couple with the inlet filter housing 114.

The fluid flow pattern of FIG. 3 illustrates the direction of fluid flow in the apparatus 200. During operation, the vane conditioning fluid generator 202 converts the supply fluid 138 into a hot fluid stream 222 and a cold fluid stream 224. Comparatively, the hot fluid stream 222 has a temperature that is higher relative to a temperature of the cold fluid stream 224. Operation of the flow control device 204 can deliver the hot fluid stream 222 and the cold fluid stream 224, as well as combinations thereof, as the first fluid stream 140 and the second fluid stream 142 to the inlet filter housing 114. Examples of the flow control device 204 can operate in one or more operating states that determine the temperature of the first fluid stream 140 and the second fluid stream 142. To effectuate these operating states, the flow control device 204 can comprise one or more elements that actuate in response to signals, e.g., valves (e.g., solenoid valves). These elements can have, for example, an open position and a closed position that permits and/or prevents the flow of fluid therethrough. In one implementation, the operating states of the flow control device 204 include a first state that permits the hot fluid stream 222 to flow as one or both of the first fluid stream 140 and the second fluid stream 142 and a second state that permits the cold fluid stream 224 to flow as one or both of the first fluid stream 140 and the second fluid stream 142. Other operating states may exist to manage the temperature of the first fluid stream 140 and the second fluid stream 142, e.g., by mixing the hot fluid stream 222 and the cold fluid stream 224 together.

Various factors can determine the selection of the operating state (e.g., the first state and the second state). For example, weather conditions that prevail in the proximity of the power generating system 102 may require operation of the flow control device 204 in the first state to defrost, melt, and prevent ice-build up on the surface of the vanes (e.g., vane separators 124 of FIG. 1). High humidity and fog conditions, on the other hand, may require operation of the flow control device 204 in the second state to facilitate condensation of water vapor out of the saturated air 110.

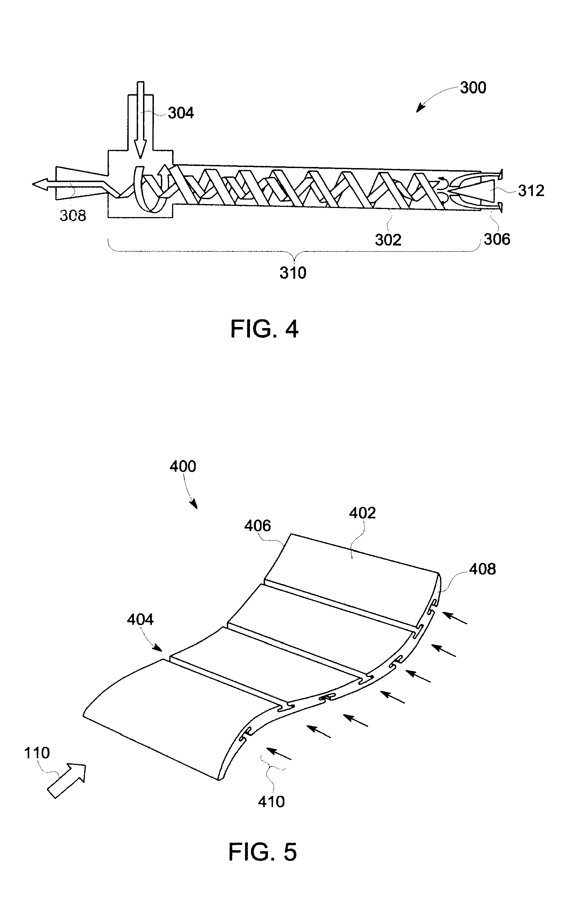

FIG. 4 depicts an example of a vane conditioning fluid generator 300 in the form of a vortex tube 302 and/or related mechanical device with no moving parts. The vortex tube 302 can separate a supply fluid 304 (e.g., supply fluid 138 of FIGS. 1, 2, and 3) into a hot fluid stream 306 (e.g., hot fluid stream 222 of FIG. 3) and a cold fluid stream 308 (e.g., cold fluid stream 224 of FIG. 3). The vortex tube 302 includes an elongated tubular body 310 and a nozzle element 312. Examples of the vortex tube 302 can generate cold fluid with temperatures down to -10°C and hot fluid with temperatures up to 125°C. The pressure of the supply fluid 304 can be from 10 psig and 120 psig.

As shown in FIG. 4, in one embodiment, compressed supply fluid 304 is injected circumferentially into the vortex tube 302. Some of the fluid spins inward to the center and travels longitudinally up the elongated tubular body 310 where the nozzle element 312 turns the spinning column (i.e. the "vortex") of fluid inside itself. This features creates two columns of fluid, e.g., an inside column and an outside column. In one embodiment, heat from the inside column of fluid transfers to the outside column. The elongated tubular body 310 directs the inside column of fluid, now cooler as a result of the thermal energy transfer to the outside column of fluid, out of one end of the elongated tubular body 310 as the cold fluid stream 308. The outside column of fluid exhausts out of the opposite end of the elongated tubular body 302 proximate the nozzle element 312 as the hot fluid stream 306. In one example, the position of the nozzle element 312 relative to the elongated tubular body 310 controls properties (e.g., temperature, velocity, flow rate, etc.) of the hot fluid stream 306 and the cold fluid stream 308.

FIG. 5 illustrates an example of a vane separator 400 for use in the vane stages (e.g., vane stages 118, 120 of FIG. 1). The vane separator 400 includes a curvilinear body 402 with a plurality of channels 404 that extend from a first side 406 to a second side 408 of the curvilinear body 402. The channels 404 have open ends to permit vane conditioning fluid 410 to flow through. As discussed above, the vane conditioning fluid 410 can comprise fluid at varying temperatures to raise and lower the temperature of the curvilinear body 402.

Examples of the curvilinear body 402 have a generally aerodynamic shape that enables air (e.g., air 110 of FIG. 1) to flow across the vane separator 400 with relatively little resistance (e.g., drag). When placed in the path of air, however, the vane 400 provides adequate resistance to facilitate removing liquid and/or particulates from the air, e.g., by condensation. The channels 404 provide a receptacle area into which the condensed liquid can flow. In one example, the channels 404 also provide a conduit for the liquid to flow out of the vanes 400, e.g., to a drain or other area of the vane stage.

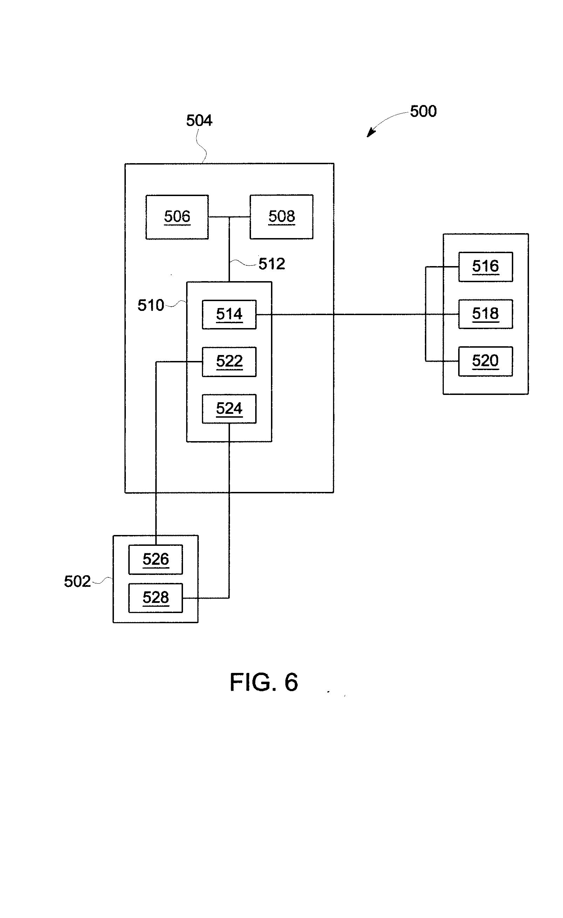

FIG. 6 illustrates a schematic diagram of a system 500 to modify the temperature of the vane separators to promote condensation of liquids in air (e.g., air 110 of FIG. 1) flowing through a power generating system. The system 500 includes a vane conditioning apparatus 502 and a controller 504 that can exchange signals with the apparatus 502 to effectuate operation. The controller 504 has a processor 506, memory 508, and control circuitry 510. Busses 512 couple the components of the controller 504 together to permit the exchange of signals, data, and information from one component of the controller 504 to another. In one example, the control circuitry 510 comprises sensing circuitry 514 which couples with sensors (e.g., an ambient humidity sensor 516, an ambient temperature sensor 518, and a vane separator temperature sensor 520). The control circuitry 510 also includes flow control circuitry 522 and vane fluid conditioning generator circuitry 524 that couple with the vane conditioning apparatus 502. More particularly, the flow control circuitry 522 can couple, e.g., with a flow control device 526 and the vane fluid conditioning generator circuitry 524 can couple, e.g., with a vortex tube 528.

This configuration of components can dictate operation of the vane conditioning apparatus 502 to control the temperature of fluid streams that heat and/or cool the vane separators. For example, one or more of the sensors 516, 518, 520 can provide signals (or inputs) that relate to information about the environment surrounding the power generating system. This information may include weather information (e.g., temperature, relative humidity, barometric pressure, etc.) as well as information about conditions inside of the power generating system, e.g., inside of the inlet system 104 (FIG. 1). In one example, the vane separator temperature sensor 520 comprises a thermocouple (or, in one example, an array of thermocouples) to monitor the temperature of a vane separator. Data from the thermocouple can cause the controller 504 to generate signals (or outputs) that instruct the vane conditioning apparatus 502 to change the temperature of the fluid streams. This combination of components can form a feedback loop, which permits the system 500 to provide dynamic control of the temperature of the vane separators.

Features of the elements of the controller can facilitate operation of this feedback loop and, generally, control of the vane conditioning apparatus 502. The controller 502 and its constructive components, for example, can communicate amongst themselves and/or with other circuits (and/or devices), which execute high-level logic functions, algorithms, as well as executable instructions (e.g., firmware and software instructions and programs). Exemplary circuits of this type include, but are not limited to, discrete elements such as resistors, transistors, diodes, switches, and capacitors. Examples of the processor 504 include microprocessors and other logic devices such as field programmable gate arrays ("FPGAs") and application specific integrated circuits ("ASICs"). Although all of the discrete elements, circuits, and devices function individually in a manner that is generally understood by those artisans that have ordinary skill in the electrical arts, it is their combination and integration into functional electrical groups and circuits that generally provide for the concepts that are disclosed and described herein.

The structure of the components in system 500 can permit certain determinations as to the temperature of the fluid streams that the vane conditioning apparatus 502 generates. For example, the electrical circuits of the controller 504 can physically manifest theoretical analysis and logical operations and/or can replicate in physical form an algorithm, a comparative analysis, and/or a decisional logic tree, each of which operates to assign the output and/or a value to the output that correctly reflects one or more of the nature, content, and origin of the changes that occur and that are reflected by the relative inputs to the flow control device 526 and vane fluid conditioning generator 528 as provided by the corresponding control circuitry, e.g., in the control circuitry 510.

In one embodiment, the processor 506 is a central processing unit (CPU) such as an ASIC and/or an FPGA that is configured to instruct and/or control operation of the flow control device 526 and vane fluid conditioning generator 528. This processor can also include state machine circuitry or other suitable components capable of controlling operation of the components as described herein. The memory 508 includes volatile and non-volatile memory and can store executable instructions including software (or firmware) instructions and configuration settings. Each of the sensing circuitry 514, the flow control circuitry 522, and the vane fluid conditioning generator circuitry 524 can embody stand-alone devices such as solid-state devices. Examples of these devices can mount to substrates such as printed-circuit boards and semiconductors, which can accommodate various components including the processor 506, the memory 508, and other related circuitry to facilitate operation of the controller 504 in connection with its implementation in the system 500.

However, although FIG. 6 shows the processor 506, the memory 508, the components of the control circuitry 510 as discrete circuitry and combinations of discrete components, this need not be the case. For example, one or more of these components can comprise a single integrated circuit (IC) or other component. As another example, the processor 506 can include internal program memory such as RAM and/or ROM. Similarly, any one or more of functions of these components can be distributed across additional components (e.g., multiple processors or other components)..

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A vane conditioning system (200) that can couple with a vane stage (118,120) in a power generating system (102), said vane conditioning apparatus (100) comprising:
a vane conditioning fluid generator (202) that converts supply fluid to a hot fluid stream and a cold fluid stream; and
a flow control device coupled (204) to the vane conditioning fluid generator (202) to receive the hot fluid stream and the cold fluid stream, the flow control device (204) having a plurality of operating states to direct one or both of the hot fluid stream and the cold fluid stream to change a temperature of a vane separator (124) in the vane stage (118,120).

2. The system of claim 1, wherein the vane conditioning fluid generator (202) mechanically converts the supply fluid to the hot fluid stream and the cold fluid stream.

3. The system of claim 1 or 2, wherein the vane conditioning fluid generator (202) comprises a vortex tube (302).

4. The system of any of claims 1 to 3, wherein the hot fluid stream has a temperature that can raise the temperature of the vane separator (124) to prevent moisture from freezing on a surface of the vane separator (124).

5. The system of any of claims 1 to 4, wherein the cold fluid stream has a temperature that can lower the temperature of the vane separator (124) to promote phase change of water vapor in air from vapor to liquid.

6. The system of any preceding claim, wherein the plurality of operating states comprises a first state to direct the hot fluid stream to the vane separator (124).

7. The system of any preceding claim, wherein the plurality of operating states comprises a second state to direct the cold fluid stream to the vane separator (124).

8. The system of any preceding claim, further comprising a controller (504) coupled to the flow control device (204), the controller (504) comprising a processor (506|), memory (508), and executable instructions stored on memory (508) and configured to be executed by the processor (506), the executable instruction comprising an executable instruction for changing the state of the flow control device (204) in response to an input from a sensor (516,518).

9. The system of claim 8, wherein the executable instructions further comprise an executable instruction for changing the temperature of one of the hot fluid stream and the cold fluid stream.

10. The system of claim 8 or 9, further comprising a vane temperature sensor (518) coupled to the controller (504), the vane temperature sensor (518) generating an input that reflects a temperature on the surface of the vane separators (124,400), wherein the executable instruction comprise executable instruction for selecting a first state to direct hot fluid from the vane conditioning fluid generator (202) to the vane separators and a second state to direct cold fluid from the vane conditioning fluid generator (202) to the vane separators in response to the input from the vane temperature sensor (518).

11. The system of any of claims 8 to 10, further comprising an ambient temperature sensor coupled to the controller (504), the ambient temperature sensor generating an input that reflects a temperature of air flowing through the power generating system (102), wherein the executable instruction comprise executable instruction for selecting a first state to direct hot fluid from the vane conditioning fluid generator (202) to the vane separators and a second state to direct cold fluid from the vane conditioning fluid generator (202) to the vane separators in response to the input from the ambient temperature sensor.

12. The system of any of claims 8 to 11, wherein the executable instructions comprise an executable instruction for selecting a first state to direct hot fluid from the vane conditioning fluid generator (204) and a second state to direct cold fluid from the vane conditioning fluid generator (202) to the vane separators in response to weather conditions of the environment surrounding the power generating system (102).

13. The system of any of claims 8 to 12, wherein the executable instruction comprise executable instructions for operating the vane conditioning fluid generator (202) for setting a temperature of the hot fluid and the cold fluid.

14. A power generating system, comprising:
a turbo-machine (106);
an inlet system (104) coupled to the turbo-machine (106), the inlet system (104) directing air from the surrounding environment to the turbo-machine (106), the inlet system (104) comprising an inlet filter housing (114) with a vane separator (124); and
a vane conditioning system of any of claims 1 to 13 coupled to the inlet filter housing.

15. The power generating system of claim 14, wherein the turbo-machine (106) provides the supply fluid.
